# EUROPÄISCHE PATENTANMELDUNG

(11) **EP 3 355 271 A1**
(43) Veröffentlichungstag der Anmeldung: **01.08.2018**
(21) Anmeldenummer: 17206924.7
(22) Anmeldetag: 13.12.2017
(51) Int. Cl.: G06T 7/00, G06K 9/62

(54) **VERFAHREN ZUR COMPUTERGESTÜTZTEN KONFIGURATION EINES INSPEKTIONSSYSTEMS**

(30) Priorität: 31.01.2017 DE 102017000856
(71) Anmelder: Seidenader Maschinenbau GmbH, 85570 Markt Schwaben (DE)
(72) Erfinder: Kwoka, Marcin, 85661 Forstinning (DE)
(74) Vertreter: Laufhütte, Dieter

(57) **Zusammenfassung**

Die Erfindung betrifft ein Verfahren zur computergestützten Konfiguration eines mehrere Inspektionswerkzeuge aufweisenden Inspektionssystems zur Beurteilung eines Prüflings, wobei für jedes der mehreren Inspektionswerkzeuge ein Parameterraum definiert wird, in dem eine Vielzahl möglicher Parametereinstellungen für das jeweilige Inspektionswerkzeug vorhanden ist, das Inspektionssystem mit seinen mehreren Inspektionswerkzeugen eine Trainingsinspektion von Gutprodukten und/oder Defektprodukten eines Prüflings für jede Parametereinstellung im Parameterraum eines jeweiligen Inspektionswerkzeugs durchführt und die Ergebnisse für jedes Inspektionswerkzeug in einer eigenen Tabelle ablegt, eine Ergebnistabelle aus den Inspektionswerkzeug-spezifischen Tabellen erzeugt wird, die sämtliche Kombinationen der Parameter der verschiedenen Parameterräume sowie die zugehörigen Ergebnisse enthält, diejenigen Kombinationen der Parameter aus der Ergebnisliste ausgewählt werden, die einen Schwellenwert in Bezug auf eine Erkennungsrate und/oder eine Falschausschussrate übersteigen, und eine finale Konfiguration des Inspektionssystems eine der ausgewählten Kombinationen der Parameter aus der Ergebnisliste ist.

## Beschreibung

Die Erfindung betrifft vollautomatische auf Bildverarbeitung basierende Inspektionssysteme, die in einer Vielzahl von technischen Bereichen, wie beispielsweise der pharmazeutischen Industrie, der Getränkeindustrie oder auch der Halbleiterindustrie, eingesetzt werden, um fehlerhafte Produkte zu erkennen und sie aus dem weitern Produktionsprozess, wie zum Beispiel Verpackung, Abfüllung oder Auslieferung, auszuschleusen.
Ein hierfür geeignetes Bildverarbeitungssystem besteht in der Regel aus einem oder mehreren optischen Sensoren (z. B. CCD/CMOS-Kameras) ausgestattet mit weiteren optischen Komponenten (z. B. Objektiven, Spiegeln), einer Beleuchtung, einer Transportvorrichtung (die mit einer Synchron- bzw. Schnellrotation kombinierbar ist) und einer Auswertungssoftware.
Alle oben genannten Komponenten müssen angepasst/konfiguriert werden, um eine optimale Inspektionsqualität zu gewährleisten, die sich wiederspiegelt in einer maximalen Erkennungsrate (Detektion Rate DR) und einer minimalen Falschauswurfsrate (False Reject Rate FRR).

Die Parametrisierung der Auswertungssoftware (Algorithmus), sowie eine Parametrisierung der anderen Komponenten, die einen Einfluss auf die Qualität des Bildes oder Sichtbarkeit eines Fehlers haben können, ist ein zeitaufwendiger, iterativer Prozess.

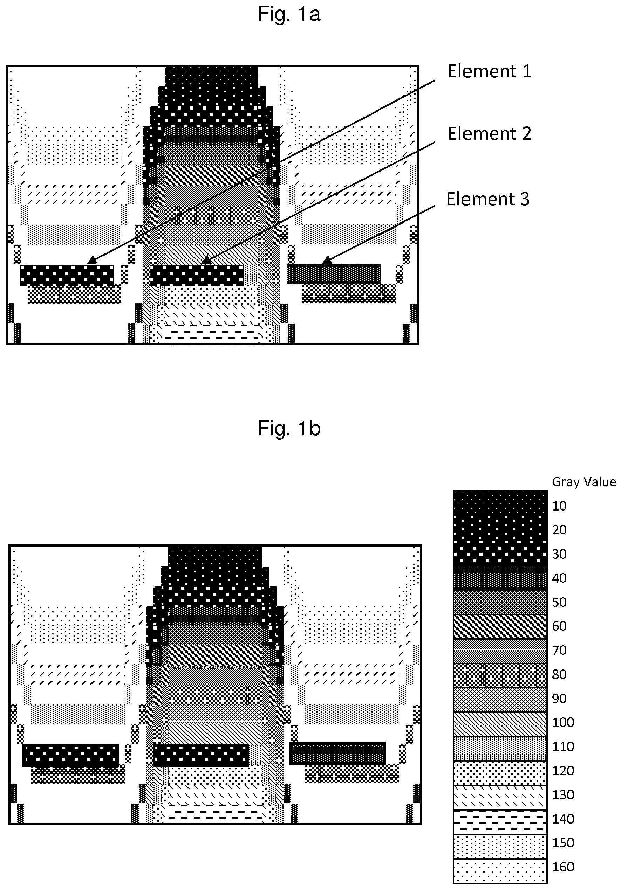

Als Beispiel wird auf die Figuren 1a und 1b verwiesen, anhand derer die Problematik einer Konfiguration eines Inspektionssystems demonstriert werden soll. Fig. 1a zeigt dabei einen in verschiedenen Grautönen gehaltenen Hintergrund sowie drei sich in ihrer Farbe leicht davon abhebende Elemente. Der besseren Übersichtlichkeit halber sind die drei Elemente in Fig. 1b mit einem Kästchen umrandet dargestellt.

Um die drei Elemente auf dem Bild mit einem auf Bildverarbeitung (BV) basierenden Inspektionssystem zu erkennen, muss das System/ Algorithmus bzw. eine Auswertungssoftware mit Hilfe von mehreren Eingangsparametern und Grenzwerten (oder auch Limit-Werte) konfiguriert werden. Die nachfolgend dargestellte Tabelle 1 zeigt anhand des in den Figuren 1 a und 1 b dargestellten Beispiels mögliche Konfigurationssetups eines auf Bildverarbeitung basierenden Inspektionssystems.

In dieser Tabelle sind beispielhaft sieben unterschiedliche Konfigurationssetups des Inspektionssystems aufgeführt. Dabei beschreiben die Eingabeparameter Threshold-Low und Threshold-Hi Schwellenwerte, die zur Binarisierung des Grauwertbildes der Fig. 1a bzw. Fig. 1b dienen. In Abhängigkeit dieser Schwellenwerte werden also Grauwerte, die beispielsweise in einem Wertebereich von 0 bis 255 liegen können, in schwarze oder weiße Bildpunkte gewandelt. Als weiterer Eingangsparameter wird die Position und Größe des zu untersuchenden Bereichs der in Fig. 1a dargestellten Abbildung variiert. Hierzu werden die Eingangsparameter Left, Top, Width und Height variiert, was zu unterschiedlichen Positionen und Größen des Inspektionswerkzeugs bei den unterschiedlichen Konfigurationssetups führt. Als Vergleich lässt sich hierfür der gepunktete Beobachtungsrahmen der Konfiguration aus Zeile 1 mit der Konfiguration aus Zeile 5 heranziehen.

**Tabelle 1: Konfigurationsmöglichkeiten des Inspektionssystems.**

| ID # des Konfigurationssetup | Eingangsparameter der Bildverarbeitungssoftware | Ergebnisbild und Position des Inspektionswerkzeugs | Limit Werte zur Klassifizierung der Ergebnisse der Bildverarbeitung | | Endergebnis des Inspektionssystems |
|---|---|---|---|---|---|
| | | | Stufe 1 Area [Pix] | Stufe 2 Anzahl Obj. | |
| 1 | Threshold Low = 255 | 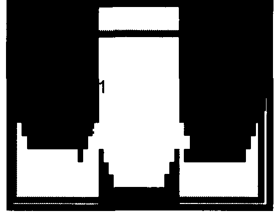 | 0 < Area < 20000 | 3 < Anzahl <3 | Drei Objekte nicht gefunden Setup ist falsch |
| | Threshold Hi = 134 | | | | |
| | Left = 5 | | Obj.1 Area = 15000 | Anzahl = 1 | |
| | Top = 20 | | | | |
| | Width = 190 | | | | |
| | Height = 170 | | | | |
| 2 | Threshold Low = 228 | 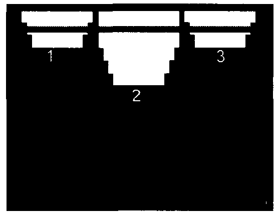 | 0 < Area < 10000 | 3 < Anzahl <3 | Falsche drei Objekte gefunden Setup ist falsch |
| | Threshold Hi = 55 | | Obj.1 Area = 520 | | |
| | Left = 5 | | Obj.1 Area = 2460 | Anzahl = 3 | |
| | Top = 20 | | | | |
| | Width = 190 | | Obj.1 Area = 520 | | |
| | Height = 170 | | | | |
| 3 | | 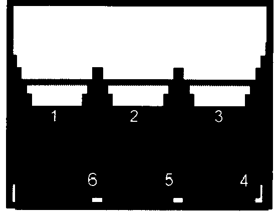 | 100 < Area < 1000 | 3 < Anzahl < 3 | Falsche drei Objekte gefunden Setup ist falsch |
| | Threshold Low = 228 | | Obj.1 Area = 830 | | |
| | Threshold Hi = 55 | | Obj.2 Area = 830 | | |
| | Left = 5 | | Obj.3 Area = 830 | | |
| | Top = 20 | | Obj.4 Area = 50 | Anzahl = 3 | |
| | Width = 190 | | Obj.5 Area = 30 | | |
| | Height = 90 | | Obj.6 Area = 30 | | |
| 4 | | 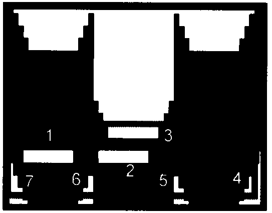 | 100 < Area < 450 | 3 < Anzahl < 3 | Sechs Objekte gefunden Setup ist falsch |
| | | | Obj.1 Area = 400 | | |
| | Threshold Low = 227 | | Obj.2 Area = 400 | | |
| | Threshold Hi = 91 | | Obj.3 Area = 380 | | |
| | Left = 5 | | Obj.4 Area = 95 | Anzahl = 6 | |
| | Top = 140 | | Obj.5 Area = 170 | | |
| | Width = 190 | | Obj.6 Area = 170 | | |
| | Height = 50 | | Obj.7 Area = 170 | | |
| 5 | Threshold Low = 155 | 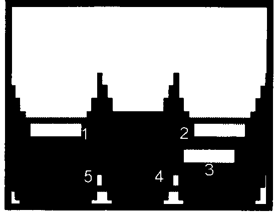 | 350 < Area < 450 | | Falsche drei Objekte gefunden Setup ist falsch |
| | Threshold Hi = 79 | | Obj.1 Area = 400 | | |
| | Left = 5 | | Obj.2 Area = 400 | 3 < Anzahl < 3 | |
| | Top = 130 | | Obj.3 Area = 400 | Anzahl = 3 | |
| | Width = 180 | | Obj.4 Area = 30 | | |
| | Height = 50 | | Obj.5 Area = 30 | | |
| 6 | | 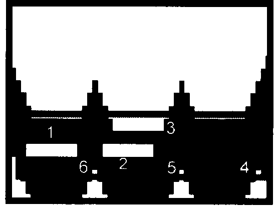 | 390 < Area < 410 | | Falsche drei Objekte gefunden Setup ist falsch |
| | Threshold Low = 162 | | Obj.1 Area = 400 | | |
| | Threshold Hi = 92 | | Obj.2 Area = 400 | 3 < Anzahl < 3 | |
| | Left = 5 | | Obj.3 Area = 400 | Anzahl = 3 | |
| | Top = 130 Width = 180 | | Obj.4 Area = 30 | | |
| | Height = 50 | | Obj.5 Area = 30 | | |
| | | | Obj.6 Area = 30 | | |
| 7 | | 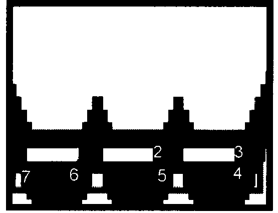 | 390 < Area < 410 | 3 < Anzahl < 3 | Richtige drei Objekte gefunden Setup ist korrekt |
| | | | Obj.1 Area = 400 | | |
| | Threshold Low = 159 | | Obj.2 Area = 400 | | |
| | Threshold Hi = 93 | | Obj.3 Area = 400 | | |
| | Left = 5 | | Obj.4 Area = 30 | Anzahl = 3 | |
| | Top = 140 | | Obj.5 Area = 60 | | |
| | Width = 180 | | Obj.6 Area = 60 | | |
| | Height = 40 | | Obj.7 Area = 30 | | |

Die dritte Spalte dieser Tabelle zeigt dabei, das entsprechend dem Schwellenwerten umgewandelte Schwarzweißbild, welches ursprünglich auf Fig. 1a basiert. Zusätzlich ist mit einem Kasten die Größe des Inspektionswerkzeugs, also die Größe und Position des zu untersuchenden Bildausschnitts visuell dargestellt. Darin zusammenhängende weiße Pixelbereiche werden durchnummeriert und in der vierten und fünften Spalte einer näheren Untersuchung unterzogen.

Am Beispiel des ersten Konfigurationssetups erkennt man, dass aufgrund der Schwellenwerte, die zu dem Schwarzweißbild führen, lediglich ein zusammenhängender Bereich aus weißen Pixeln in dem zu untersuchenden Ausschnitt des Bildes vorhanden ist. Bei der in Spalte 4 und 5 vorgenommenen Klassifizierung der aus der Bildverarbeitung erhaltenen Ergebnisse wird die zulässige Größe eines zusammenhängenden Pixelbereichs im Bereich zwischen 0 und 20000 Pixel definiert.

Da der erfasste weiße Pixelbereich 15000 Pixel umfasst, wird diese Bedingung erfüllt.

In Stufe 2 wird die Anzahl der erfassten Objekte abgeglichen. Da bekannt ist, dass drei Elemente detektiert werden sollen, wird hierzu ein Abgleich gemacht, der aufgrund des lediglich einen Elements fehlschlägt. Das in der ganz rechten Spalte dargestellte Endergebnis des Inspektionssystems gibt demnach an, dass die eingestellte Konfiguration bzw. das Konfigurationssetup falsch ist und ein Detektieren der drei Elemente nicht ermöglicht. In diesem Fall wird die fehlerhafte Konfiguration daran ersichtlich, dass weniger als drei Objekte erfasst worden sind.

Das zweite Konfigurationssetup variiert die Eingangsparameter der Bildverarbeitungssoftware bezüglich der Schwellenwerte zur Umwandlung in ein Schwarzweißbild. Demnach unterscheidet sich aus das in der dritten Spalte dargestellte Schwarzweißbild signifikant von dem des ersten Konfigurationssetups. Weiter wurden die Parameter der zulässigen Flächengröße weißer Pixelbereiche auf einen Bereich zwischen 0 und 10000 Pixel reduziert. Dieser Wertebereich wird für sämtliche drei weiße Pixelgrößen erfüllt, wobei die zweite Pixelfläche knapp fünf Mal so groß ist wie die Pixelflächen 1 und 3. Auch die zweite Stufe bei der Klassifizierung der Ergebnisse der Bildverarbeitung, bei der die Anzahl der gefundenen Objekte überprüft wird, ist korrekt. Dennoch ist im Ergebnis das Konfigurationssetup falsch, da die falschen drei Objekte gefunden worden sind und die gesuchten Elemente unentdeckt geblieben sind.

Ganz ähnlich verhält es sich mit dem Konfigurationssetups 3 bis 6, bei denen unterschiedliche Schwellenwerte zur Umwandlung in ein Schwarzweißbild, verschiedene Größen und Positionen des Inspektionswerkzeugs und Beschränkungen hinsichtlich der Fläche von zusammenhängenden weißen Pixelbereichen variiert werden.

Erst das siebte Konfigurationssetup führt zu der automatisierten Erkennung der drei Elemente, die in der Fig. 1a bzw. 1b dargestellt sind. Hierzu war es erforderlich, die Größe und die Position des Inspektionswerkzeugs, als den zu untersuchenden Bildausschnitt, auf das untere Drittel der Darstellung zu richten und spezifische Schwellenwerte für die Wandlung der Grautöne in schwarze oder weiße Pixel anzunehmen. Weiter war erforderlich, dass die Bereichsgröße der zusammenhängenden weißen Pixelbereiche in einen Bereich zwischen 390 und 410 Pixel eingestellt wurde. Diese Konfiguration führt dazu, dass die richtigen drei Objekte identifiziert wurden.

In der Regel ist es nicht ausreichend ein Setup des BV-Inspektionssystems nur auf Basis von einem Bild vorzunehmen. Im Herstellungsprozess können die gesuchten Elemente leichte Abweichungen in der Form, Helligkeit, Position, Hintergrundverlauf, usw. haben, die toleriert werden müssen. Das macht eine manuelle Anpassung des Inspektionssystems aufwendig und zeitintensiv.

Aus dem Stand der Technik sind Firmen bekannt, die vollautomatische Inspektionslösungen für die abfüllende pharmazeutische Industrie herstellen. Je nach Maschinentyp, -größe, -ausführung und Anforderungen der Kunden, sind diese Maschinen mit mehreren Kameras, Bildverarbeitungseinheiten und den zugehörigen optischen Komponenten ausgestattet. Fehlerhafte Produkte sollen ausgeworfen, fehlerfreie Produkte von dem System akzeptiert werden.

Die Produkte werden in der Regel in transparente Glasbehältnisse (z. B. Vials, Ampullen aus Klar-, od. Braunglas) abgefüllt. Hierbei handelt es sich meist um Flüssigkeiten oder bspw. auch gefriergetrocknete Kuchen unterschiedlicher Färbung, Viskosität, Volumina, et cetera. Kunden definieren Fehlerkategorien, wie zum Beispiel Seitenwand-, Boden-, oder Partikelfehler, die mit Hilfe der Inspektionsmaschinen detektiert werden sollen.

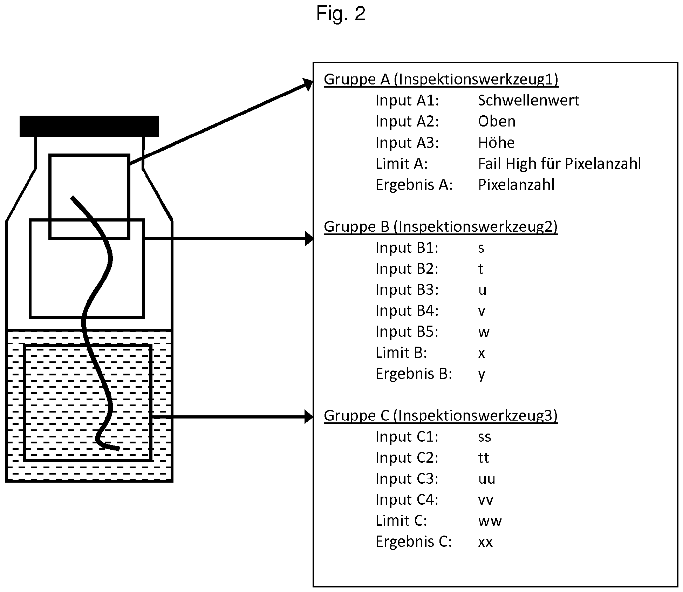

Wegen der Vielfalt möglicher Fehler und deren Position wird die Aufgabe aus dem Beispielbild nach Fig. 1a noch komplizierter. Im Hinblick auf Fehler, die auch durch mehrere Inspektionswerkzeuge erkannt werden können, multiplizieren sich noch die Möglichkeiten des Setups (vgl. Fig. 2).

In der Realität kommt es nicht selten vor, dass ein Teil der kundenseitig definierten fehlerhaften Produkte sich in einem "grauen" Bereich befindet und eine endgültige Klassifizierung von "gut" bzw. "schlecht" mehrmals geändert wird.

In solchen Fällen muss die zeitaufwendige Parametrisierung des Inspektionssystems stark angepasst oder komplett wiederholt werden.

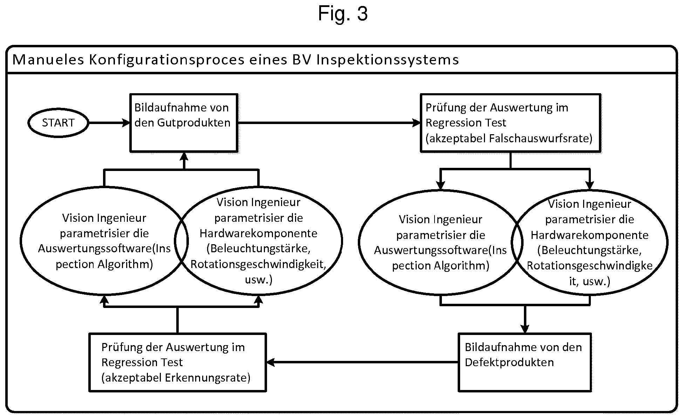

Zurzeit wird ein Anpassungsprozess/Konfigurationsprozess des BV-Inspektionssystems in einem manuellen und iterativen Verlauf realisiert. Siehe Flussdiagram in Fig. 3.

Dabei wird eine Aufnahme von Gutprodukten durchgeführt und eine Auswertung hinsichtlich einer akzeptablen Falschauswurfsrate vorgenommen. Im Anschluss daran wird mit akzeptaben Werten für die Falschauswurfrate eine Aufnahme von Defektprodukten vorgenommen und in Anbetracht einer akzeptablen Erkennungsrate von Defektprodukten eine Konfiguration ausgewählt, mit der dann erneut eine Variation der Einstellungsparameter vorgenommen wird, um in einem iterative Prozess möglichst gute Werte für die Falschauswurfrate und die Erkennungsrate zu erhalten.

Am Ende des Konfigurationsprozesses wird ein Setup gefunden, das ein konkretes Paar von Falschauswurf- und Erkennungsrate bietet.

Nachteilhaft hieran ist, dass der Konfigurationsprozess des Inspektionssystems sehr lange dauert. Zudem führen die erforderlichen Testzyklen mit ihren iterativen Schritten zum Erlangen eines passablen Konfigurationssetups zu langen Maschinenbelegungszeiten am Aufbauort der Maschine. Es ist die Aufgabe der vorliegenden Erfindung die oben aufgeführten Nachteile beim Konfigurieren eines Inspektionssystems zu überwinden. Dies gelingt mit einem Verfahren zur computergestützten Konfiguration eines mehrere Inspektionswerkzeuge aufweisenden Inspektionssystems, das dazu ausgelegt ist, einen Prüfling zu untersuchen, wobei das Verfahern sämtliche Merkmale des Anspruchs 1 umfasst.

Demnach wird bei einem solchen Verfahren für jedes der mehreren Inspektionswerkzeuge ein Parameterraum definiert, in dem eine Vielzahl möglicher Parametereinstellungen für das jeweilige Inspektionswerkzeug vorhanden ist. Ferner führt das Inspektionssystem mit seinen mehreren Inspektionswerkzeugen eine Trainingsinspektion von Gutprodukten und/oder Defektprodukten eines Prüflings für jede Parametereinstellung im Parameterraum eines jeweiligen Inspektionswerkzeugs durch und legt die Ergebnisse für jedes Inspektionswerkzeug in eine eigene Tabelle ab. Weiter wird eine Ergebnistabelle aus den Inspektionswerkzeug spezifischen Tabellen erzeugt, die sämtliche Kombinationen der Parameter der verschiedenen Parameterräume sowie die zugehörigen Ergebnisse enthält, wobei diejenigen Kombinationen der Parameter aus der Ergebnisliste ausgewählt werden, die einen Schwellenwert in Bezug auf eine Erkennungsrate und/oder eine Falschausschussrate übersteigen, und eine finale Konfiguration des Inspektionssystems eine der ausgewählten Kombinationen der Parameter aus der Ergebnisliste ist.

Ein Inspektionswerkzeug kann beispielsweise eine Bildaufnahmeeinheit sein, die einen gewissen Bereich eines zu inspizierenden Prüflings erfasst. Als Parametereinstellung für ein solches Inspektionswerkzeug kommt beispielsweise die Größe und die Position des Erfassungsbereichs, eine Belichtung des Erfassungsbereichs oder ein oder mehrere Parameter bei der Bildverarbeitung infrage.

Während einer Trainingsinspektion von Gutprodukten und/oder Defektprodukten werden mangelfreie oder mangelbehaftete Produkte bei einer gewissen Parametereinstellung des Inspektionswerkzeugs untersucht und die erreichten Ergebnisse der Trainingsinspektion für jedes Inspektionswerkzeug in eine Tabelle gespeichert. Die Qualität der während einer Trainingsinspektion eingestellten Parametereinstellungen eines Inspektionswerkzeugs lässt sich anhand des Vergleichs mit den im Vorhinein bekannten tatsächlichen Eigenschaften (mangelfrei oder mangelbehaftet) des Prüflings abgleichen.

Aufgrund des Vorhandenseins von mehreren Inspektionswerkzeugen in dem Inspektionssystem müsste für ein vollständiges Durchfahren sämtlicher Parameter aller vorhandenen Inspektionswerkzeuge eine sehr hohe Anzahl von unterschiedlichen Parametereinstellungen durchprobiert werden. Dies ist aber nur bedingt praktikabel, da die Anzahl von möglichen Kombinationen exponentiell steigt und die Bildverarbeitungsalgorithmen eine bestimmte Auswertungszeit pro Kombination erfordern. Daher schlägt die Erfindung vor, die Kombinationen nur innerhalb eines Inspektionswerkzeug-spezifischen Parameterraums durchzuführen und Kombinationen zwischen den Inspektionswerkzeugen in eine Ergebnistabelle aus den Inspektionswerkzeug-spezifischen Tabellen zu erzeugen.

Nach einer optionalen Fortbildung der Erfindung ist es möglich, die ausgewählten Kombinationen der Parameter, die einen Schwellenwert in Bezug auf eine Erkennungsrate und/oder eine Falschausschussrate übersteigen, in einem Diagramm darzustellen, dass die Erkennungsrate und/oder die Falschausschussrate als Ordinate aufweist und vorzugsweise die ausgewählten Kombinationen der Parameter entlang der Abszisse aufweist.

Nach einer Fortbildung der Erfindung kann dann die finale Konfiguration für das Inspektionssystem aus dem Diagramm ausgewählt werden.

Nach einer weiteren Fortbildung der Erfindung kann ein einzelner Parameter der finalen Konfiguration auf seine Stabilität überprüft werden, wobei vorzugsweise hierbei ein Diagramm erstellt wird, dass die Erkennungsrate und/oder Falschausschussrate in unmittelbarer Nähe des ausgewählten Parameters darstellt.

Nach einer weiteren optionalen Fortbildung der Erfindung läuft die Trainingsinspektion von Gutprodukten und/oder Defektprodukten eines Prüflings, die für jede Parametereinstellung eines jeweiligen Parameterraums eines Inspektionswerkzeugs durchgeführt wird, parallel für die mehreren Parameterräume der jeweiligen Inspektionswerkzeuge ab. Das heißt, dass der Parameterraum, der für ein Inspektionswerkzeug erstellt worden ist, gleichzeitig mit einem anderen Parameterraum, der für ein anderes Inspektionswerkzeug erstellt worden ist, durchkombiniert wird.

Nach einer vorzugsweisen Ausführung des Verfahrens ist das Inspektionssystem ein optisches Inspektionssystem, das insbesondere Bildverarbeitungsalgorhitmen bei der Inspektion verwendet.

Es wird also nicht ein Parameter eines ersten Parameterraums festgehalten während alle Kombinationen eines zweiten Parameterraums durchgefahren werden und im Anschluss daran der Parameter der ersten Parameterraums geändert und erneut alle Kombinationen des zweiten Parameterraums durchgefahren werden.

Nach einer bevorzugten Ausführungsform sind die Inspektionswerkzeuge optische Inspektionswerkzeuge, die jeweils auf Bildverarbeitungsalgorhitmen zurückgreifen.

Zudem kann nach der Erfindung vorgesehen sein, dass die mehreren Inspektionswerkzeuge unterschiedliche oder voneinander verschiedene Bereiche des Prüflings inspizieren.

Vorzugsweise umfasst eine Trainingsinspektion bis zu 250 Gutprodukte und/oder Defektprodukte, 10 Testrunden und 12 Bilder pro Produkt.

Nach einer weiteren optionalen Fortbildung der Erfindung umfasst das Inspektionssystem mehrere optische Sensoren, die vorzugsweise mit optischen Komponenten wie Objektive und Spiegel versehen sind, eine Beleuchtung, eine Transportvorrichtung für den Prüfling und eine Auswertungssoftware, wobei jede dieser Komponenten nach einer Vielzahl von Parametern einstellbar ist.

Die Erfindung umfasst ferner ein Inspektionssystem zur Beurteilung eines Prüflings, das dazu ausgelegt ist, mit einem Verfahren nach einer der vorhergehenden Varianten konfiguriert zu werden.

Weitere Merkmale, Vorteile und Einzelheiten werden anhand der nachfolgend aufgeführten Figurenbeschreibung ersichtlich. Es zeigen:
- Fig. 1a:: ein Beispielbild zur Erkennung von drei Elementen in einem grauen Hintergrund,
- Fig. 1b:: eine Darstellung der Fig. 1a, bei der die zu erkennenden Bereiche schwarz umrahmt sind,
- Fig. 2:: eine Darstellung eines Prüflings, das mit einem Inspektionssystem mit mehreren Inspektionswerkzeugen geprüft wird so verschiedene Parameter der Inspektionswerkzeuge, und
- Fig. 3:: ein Ablaufdiagramm zur manuellen Konfiguration eines auf Bildverarbeitung basierenden Inspektionssystems.

Fig. 2 zeigt die Darstellung eines Prüflings, der mit einem Inspektionssystem mit drei Inspektionswerkzeugen inspiziert wird. Dabei inspizieren die verschiedenen Inspektionssysteme verschiedene Bereiche des Prüflings und weisen verschiedene variierbare Parameter auf. Das Inspektionswerkzeug 1 besitzt beispielsweise Input A1, Input A2, Input A3 und Limit A als variierbare Parameter.

Der Konfigurationsprozess des BV-Inspektionssystems wird in einem automatisierten und computergestützten Ablauf realisiert.

Am Ende des automatisierten Konfigurationsprozesses werden mehrere Paare von Falschausschuss- und Erkennungsraten erzeugt. Damit kann eine optimale Entscheidung getroffen werden, welches Paar am besten dem Kundenwunsch entspricht.

Zuerst werden die Bilder von den Gut- und Fehlerprodukten in mehreren Testrunden aufgenommen (optional auch mit unterschiedlichen Hardware-Einstellungen z.B. Beleuchtungsstärke, Rotationsgeschwindigkeit, usw.). Der Bild-Aufnahmeprozess garantiert eine eindeutige Zuordnung der Bilder zu Produkt, Testrunde und Position in der Bildsequenz (falls mehrere Bilder pro Inspektion gemacht werden).

Danach wird ein Simulationsraum für die BV-Auswertungssoftware vorbereitet. Alle Parameter, die sich in dem Simulationsraum befinden, werden in einem automatisierten Ablauf in der BV-Auswertungssoftware ausprobiert.

Damit erzeugte Inspektionsergebnisse für jedes Produkt der jeweiligen Testrunde und für die gesamten Produktgruppen "Gut" und "Defekt" werden zusammen mit einem Verweis zu den konkreten Eingangsparametern aus dem Simulationsraum in einer Datenbank gesichert.

Ein Simulationsraum kann für das in Fig. 2 präsentierte Inspektionssystem z.B. so aussehen:

**Tabelle 2**

| Simulationsraum Beispiel | | | | | |
|---|---|---|---|---|---|
| Group A | | Start | Stop | Step | # of Steps |
| 1 | Input.A1 | 10 | 20 | 10 | 2 |
| 2 | Input.A2 | 100 | 200 | 50 | 3 |
| 3 | Input.A3 | 500 | 1000 | 500 | 2 |
| | Limit.A | 7 | 10 | 1 | 4 |
| | | | | | |

| Group B | | Start | Stop | Step | # of Steps |
|---|---|---|---|---|---|
| 1 | Input.B1 | 1 | 2 | 1 | 2 |
| 2 | Input.B2 | 2 | 4 | 2 | 2 |
| 3 | Input.B3 | 3 | 6 | 3 | 2 |
| 4 | Input.B4 | 4 | 8 | 4 | 2 |
| 5 | Input.B5 | 5 | 10 | 5 | 2 |
| | Limit.B | 16 | 46 | 10 | 4 |
| | | | | | |

| Group C | | Start | Stop | Step | # of Steps |
|---|---|---|---|---|---|
| 1 | Input.C1 | 10 | 20 | 10 | 2 |
| 2 | Input.C2 | 20 | 40 | 20 | 2 |
| 3 | Input.C3 | 30 | 30 | 0 | 1 |
| 4 | Input.C4 | 40 | 40 | 0 | 1 |
| | Limit.C | 160 | 200 | 40 | 2 |

Nun soll eine Kombination von allen Inputs und Limits in dem Inspektionssystem ausprobiert werden. Das wäre aber nur bedingt möglich, da die Anzahl von möglichen Kombinationen exponentiell steigt und die Bildverarbeitungsalgorithmen eine bestimmte Auswertungszeit pro Kombination erfordern. Aus diesem Grund werden die Kombinationen nur innerhalb der jeweiligen Gruppe erzeugt. Demnach werden die Kombinationen, die aus jeder Gruppe kommen, parallel in dem Inspektionssystem ausprobiert. Das heißt, es wird pro Ablauf des Bildverarbeitungsalgorithmus gleichzeitig eine Kombination aus Gruppe A, ein Kombination aus Gruppe B und ein Kombination aus Gruppe C ausprobiert. In einem nächsten Schritt wird eine andere Kombination aus Gruppe A, eine andere Kombination aus Gruppe B und eine andere Kombination aus Gruppe C ausprobiert.

Die Ergebnisse werden pro Gruppe in einer separaten Tabelle gespeichert (siehe Tabellen 3, 4, 5 am Ende der Beschreibung - die Inputparameter aus Gruppe A generieren 48 Kombinationen, aus Gruppe B 128 Kombinationen und aus Gruppe C 8 Kombinationen). Ein entsprechender Optimierungsmechanismus sorgt dafür, dass alle möglichen Kombinationen aus jeder Gruppe mit der kleinstmöglichen Anzahl an Abläufen des Bildverarbeitungsalgorithmus ausprobiert werden.

Kombinationen zwischen den Gruppen, die nach diesem Schritt in dem Simulationsraum noch fehlen, werden in einer Datenbank aus den Gruppenergebnissen erzeugt und in einer Ergebnistabelle gespeichert. Insgesamt gibt es für die Gruppe A, B und C 49152 Kombinationen (vgl. Tabelle 6).

Die Ergebnistabelle enthält dann alle Kombinationen der Inputparameter und der zugehörigen Inspektionsergebnisse, die aus jedem Produkt in jeder Testrunde und jedem Bild in der Sequenz durch den Bildverarbeitungsalgorithmus erzeugt worden sind.

Zum Beispiel können es 250 Produkte, 10 Testrunden und 12 Bilder pro Produkt sein. Ergebnisse, die zum selben Produkt (Bildersequenz) gehören, werden schon in den Gruppen-Tabellen den einzelnen Ergebnissen zugeordnet. Das bedeutet, dass die Ergebnisstabelle in dem Fall bis zu 49152 x 250 x 10 = 122,88 Mio. einzelne Ergebnisse enthalten kann.

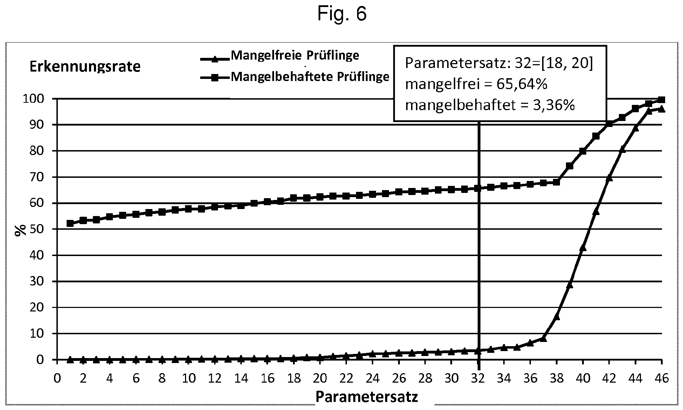

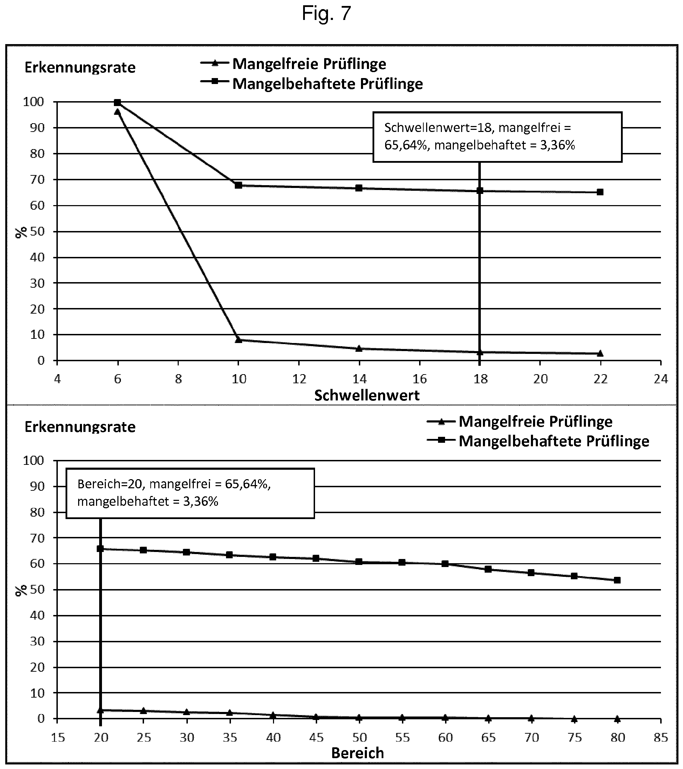

Ein Sortierungsalgorithmus wählt aus allen 49152 Input-Kombinationen nur die aus, die die höchsten Erkennungsraten bei niedrigsten Falschausschussraten erzeugen. Die ausgewählten Paare werden im Detektion Diagramm (Fig. 6) präsentiert. Aus dem Diagramm kann ein Paar (DR und FRR) ausgewählt werden, das am besten dem Kundenwunsch entspricht. Das dazugehörige Setup, das alle Inputparameter enthält, kann zusätzlich auf Stabilität des einzelnen Inputparameters überprüft werden. Dafür wird für jeden Inputparameter ein Diagramm erstellt, das die DR und FRR in unmittelbarer Nähe rausgewählten Inputwerts darstellt (Fig. 7).

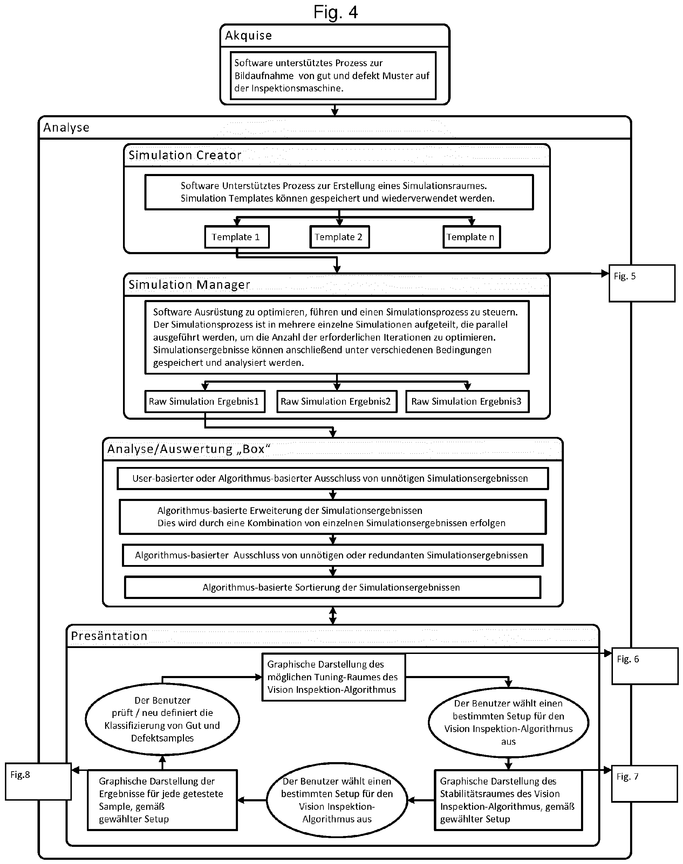

Fig. 4 zeigt nun den Ablauf bei der Konfiguration gemäß der Erfindung. Demnach wird zuerst ein Prozess zur Aufnahme mehrerer Bilder von Gut- und/oder Defektprodukten ausgeführt, der unter der Bezeichnung Akquise abläuft.

Die während der Akquise aufgenommenen Bilder werden in einem nachfolgenden Analyseschritt ausgewertet.

Dazu wird als erstes mit Hilfe eines sogenannten Simulation Creators ein jeweiliger Simulationsraum für die unterschiedlichen Inspektionswerkzeuge erstellt.

Im Simulation Manager werden die verschiedenen Parameterräume der mehreren Inspektionswerkzeuge durchgefahren und entsprechenden Aufnahmen mit den zugehörigen Einstellungen in Inspektionswerkezug-spezfische Tabellen gespeichert.

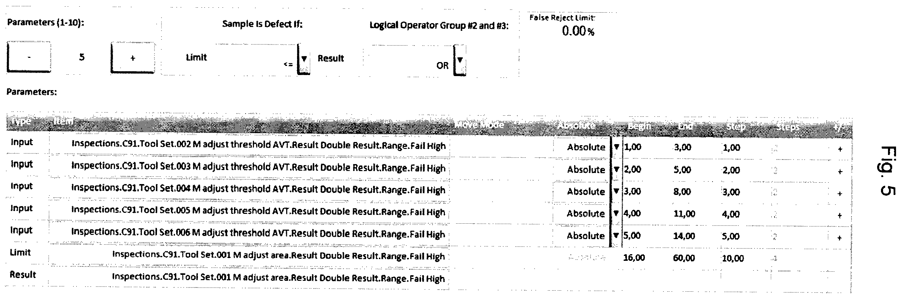

Fig 5 zeigt dabei eine Oberfläche einer Software, die einen Teil dieses Schritts darstellt.

Im Anschluss werden die Rohdaten der Inspektionswerkzeug-spezifischen Tabellen verarbeitet. Dabei werden unnötige Ergebnisse ausgeschlossen und die Simulationsergebnisse erweitert. Die Erweiterung zielt dabei auf eine Matrix, in der eine vollständige Kombination aller Parameter der mehreren Parameterräume vorhanden ist. Dies geschieht auf Grundlage der tatsächlich erhaltenen Ergebnisse aus den Inspektionswerkzeug-spezifischen Tabellen.

Nach einer algorithmus-basierten Sortierung der Simulationsergebnisse werden die möglichen Einstellungen in einer Graphik dargestellt. Diese geschieht in dem Unterschritt "Präsentation".

Fig. 6 zeigt dabei eine solche grafische Darstellung, bei der die obere der beiden Grafen für die Erkennung von defekten Prüflingen und die untere der beiden Grafen für die Erkennung auf Gutprodukten steht. Die x-Achse steht dabei für eine bestimmte Konfigurationseinstellung, also eine bestimmte Kombination der Parameter über alle Parameterräume hinweg.

Anhand dieser Darstellung ist es dem Benutzer leicht möglich, eine bestimmte Konfiguration auszuwählen. Vornehmlich wird dies anhand der Erkennungsraten der Testprüflinge, die grafische dargestellt sind, erfolgen.

Weiter ist nach der Erfindung möglich, dass die Stabilität einer gewünschten Einstellung grafisch darstellbar ist.

Fig. 7 zeigt eine solche Stabilitätsdarstellung, bei der erneut der oberer Graph die Erkennungsrate der Fehlerprodukte und der untere Graph die Erkennungsrate der Gutprodukte ist.

Nachdem der Nutzer sich für eine bestimmte Parametereinstellung entschieden hat, kann weiter eine Ergebnisdarstellung für jeden getesteten Prüfling gemäß dem gewählten Setup angezeigt werden.

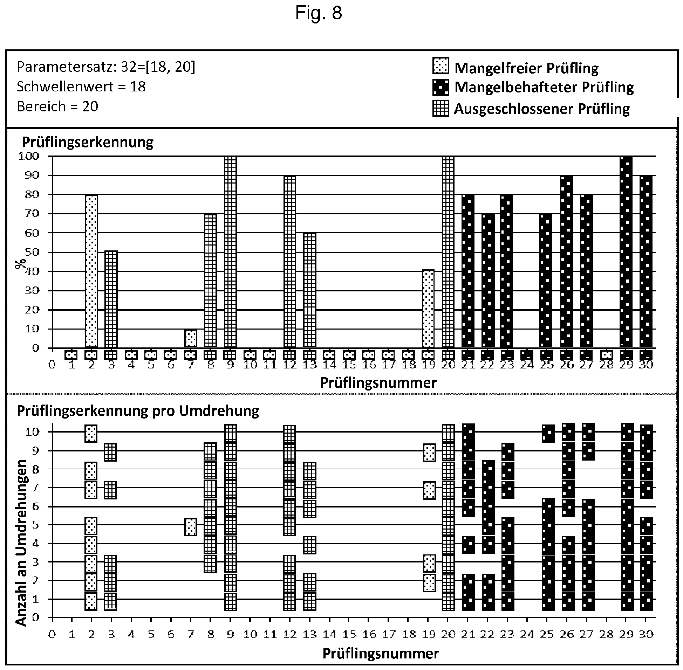

Fig. 8 zeigt eine solche Darstellung.

Ist eine Neudefinition von Gutprodukten und/oder Fehlerprodukten erforderlich beginnt der in Fig. 4 unter derm Punkt "Präsentation" dargestellte Zyklus erneut.

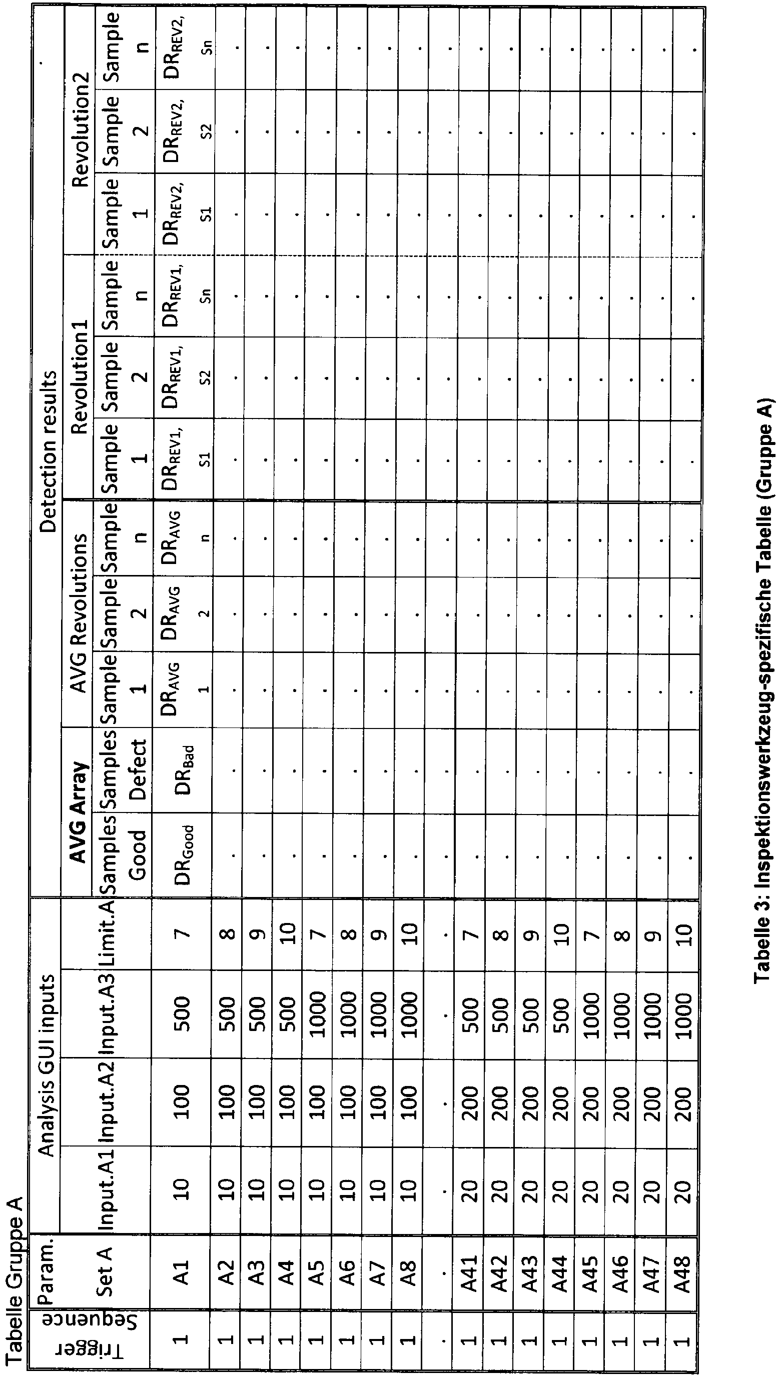

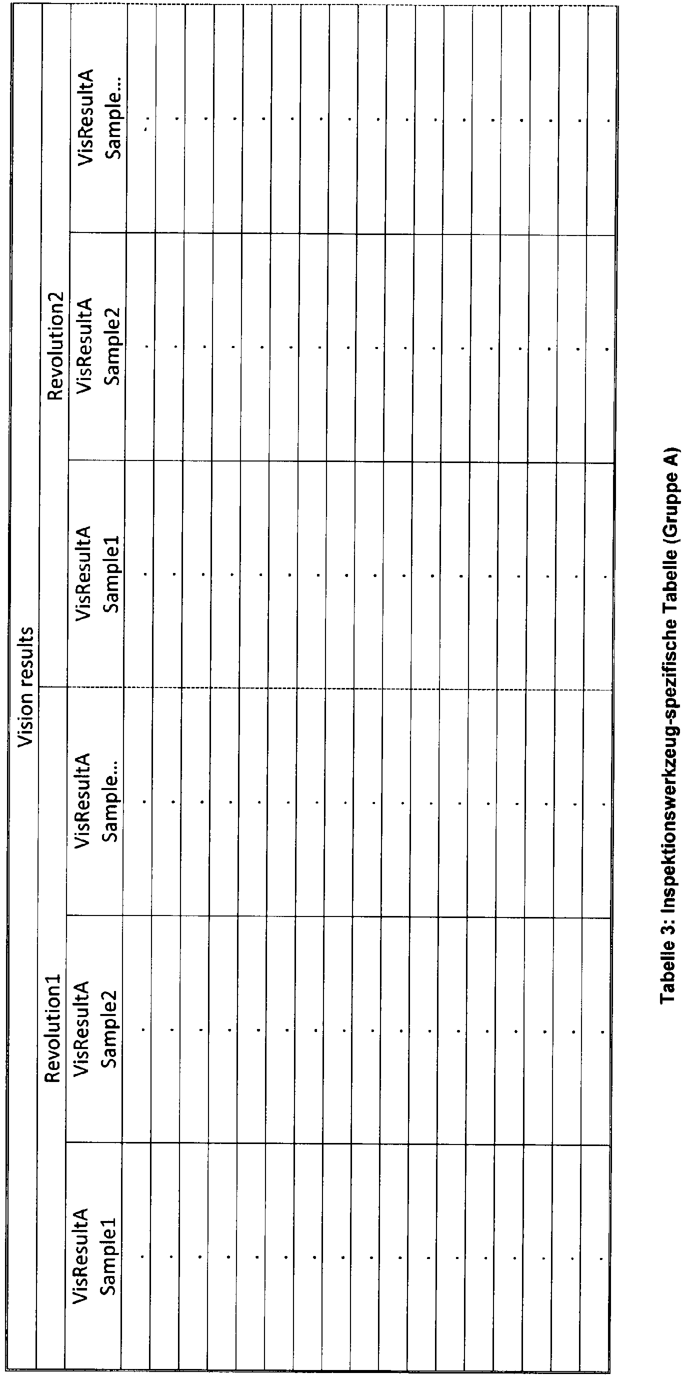

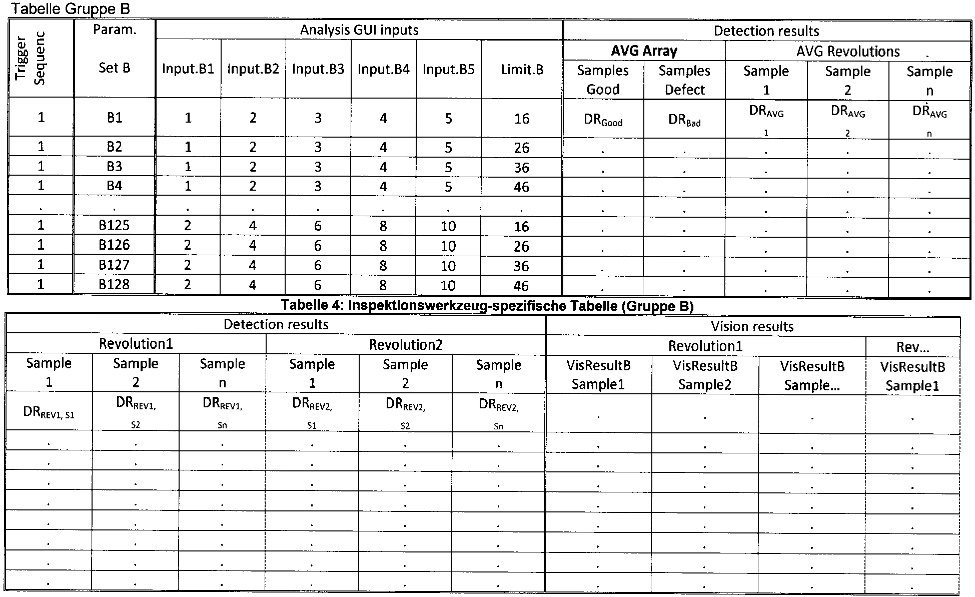

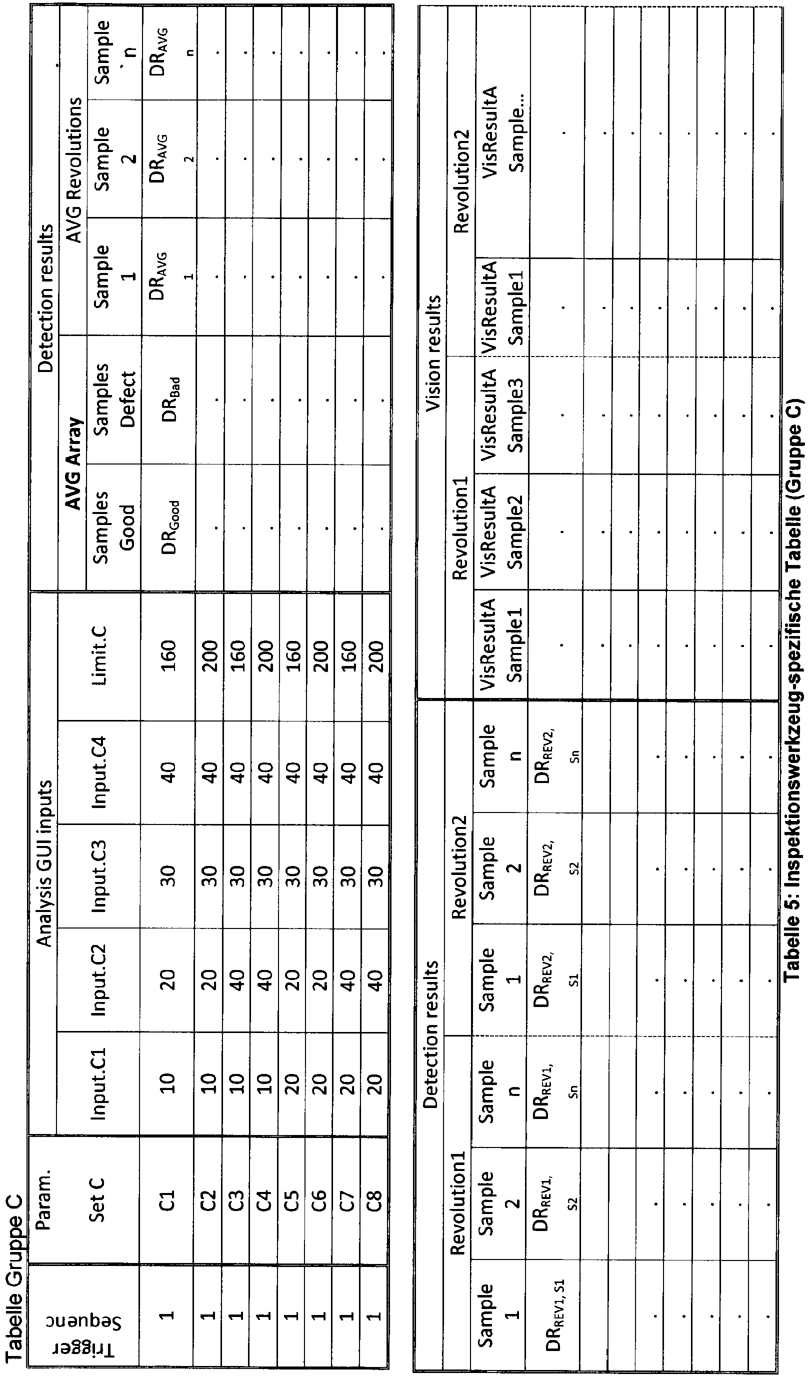

### Ergebnis Tabelle

**Tabelle 6: Ergebnistabelle**

| Param | Analysis GUI inputs | | | Detection results | | | | | | | | | | |
|---|---|---|---|---|---|---|---|---|---|---|---|---|---|---|
| Set # | Set A | Set B | Set C | **AVG Array** | | AVG Revolutions | | | Revolution1 | | | Revolution2 | | |
| | | | | Samples Good | Samples Defect | Sample 1 | Sample 2 | Sample n | Sample 1 | Sample 2 | Sample n | Sample 1 | Sample 2 | Sample n |
| 1 | A1 | B1 | C1 | DR_{Good} | DR_{Bad} | DR_{AVG 1} | DR_{AVG 2} | DR_{AVG n} | DR_{REV1, S1} | DR_{REV1, S2} | DR_{REV1, Sn} | DR_{REV2, S1} | DR_{REV2, S2} | DR_{REV2, Sn} |
| 2 | A1 | B1 | C2 | " | " | " | " | " | " | " | " | " | " | " |
| 3 | A1 | B1 | C3 | " | " | " | " | " | " | " | " | " | " | " |
| 4 | A1 | B1 | C4 | " | " | " | " | " | " | " | " | " | " | " |
| 5 | A1 | B1 | C5 | " | " | " | " | " | " | " | " | " | " | " |
| 6 | A1 | B1 | C6 | " | " | " | " | " | " | " | " | " | " | " |
| 7 | A1 | B1 | C7 | " | " | " | " | | " | " | " | " | " | " |
| 8 | A1 | B1 | C8 | " | " | " | " | " | " | " | " | " | " | " |
| . | . | . | . | " | " | " | " | " | " | " | " | " | " | " |
| 49145 | A48 | B128 | C1 | " | " | " | " | " | " | " | " | " | " | " |
| 49146 | A48 | B128 | C2 | " | " | " | " | " | " | " | " | " | " | " |
| 49147 | A48 | B128 | C3 | " | " | " | " | " | " | " | " | " | " | " |
| 49148 | A48 | B128 | C4 | " | " | " | " | " | " | " | " | " | " | " |
| 49149 | A48 | B128 | C5 | " | " | " | " | " | " | " | " | " | " | " |
| 49150 | A48 | B128 | C6 | " | " | " | " | " | " | " | " | " | " | " |
| 49151 | A48 | B128 | C7 | " | " | " | " | " | " | " | " | " | " | " |
| 49152 | A48 | B128 | C8 | " | " | " | " | " | " | " | " | " | " | " |

## Patentansprüche

1. Verfahren zur computergestützten Konfiguration eines mehrere Inspektionswerkzeuge aufweisenden Inspektionssystems zur Beurteilung eines Prüflings, wobei
für jedes der mehreren Inspektionswerkzeuge ein Parameterraum definiert wird, in dem eine Vielzahl möglicher Parametereinstellungen für das jeweilige Inspektionswerkzeug vorhanden ist,
das Inspektionssystem mit seinen mehreren Inspektionswerkzeugen eine Trainingsinspektion von Gutprodukten und/oder Defektprodukten eines Prüflings für jede Parametereinstellung im Parameterraum eines jeweiligen Inspektionswerkzeugs durchführt und die Ergebnisse für jedes Inspektionswerkzeug in einer eigenen Tabelle ablegt,
eine Ergebnistabelle aus den Inspektionswerkzeug-spezifischen Tabellen erzeugt wird, die sämtliche Kombinationen der Parameter der verschiedenen Parameterräume sowie die zugehörigen Ergebnisse enthält,
diejenigen Kombinationen der Parameter aus der Ergebnisliste ausgewählt werden, die einen Schwellenwert in Bezug auf eine Erkennungsrate und/oder eine Falschausschussrate übersteigen, und
eine finale Konfiguration des Inspektionssystems eine der ausgewählten Kombinationen der Parameter aus der Ergebnisliste ist.

2. Verfahren nach Anspruch 1, wobei die ausgewählten Kombinationen der Parameter, die einen Schwellenwert in Bezug auf eine Erkennungsrate und/oder eine Falschausschussrate überschreiten, in einem Diagramm dargestellt werden, das die Erkennungsrate und/oder die Falschausschussrate als Ordinate aufweist, und vorzugsweise die ausgewählten Kombinationen der Parameter entlang der Abszisse aufweist.

3. Verfahren nach Anspruch 2, wobei die finale Konfiguration für das Inspektionssystem aus dem Diagramm ausgewählt wird.

4. Verfahren nach einem der vorhergehenden Ansprüche, wobei ein einzelner Parameter der finalen Konfiguration auf seine Stabilität überprüft werden kann, wobei vorzugsweise hierbei ein Diagramm erstellt wird, das die Erkennungsrate und/oder Falschausschussrate in unmittelbarer Nähe des ausgewählten Parameters darstellt.

5. Verfahren nach einem der vorhergehenden Ansprüche, wobei die Trainingsinspektion von Gutprodukten und/oder Defektprodukten eines Prüflings, die für jede Parametereinstellung eines jeweiligen Parameterraums durchgeführt wird, parallel für die mehreren Parameterräume der jeweiligen Inspektionswerkzeuge abläuft.

6. Verfahren nach einem der vorhergehenden Ansprüche, wobei das Inspektionssystem ein optisches Inspektionssystem ist, das vorzugsweise Bildverarbeitungsalgorithmen bei der Inspektion verwendet.

7. Verfahren nach einem der vorhergehenden Ansprüche, wobei die mehreren Inspektionswerkzeuge optische Inspektionswerkzeuge sind, die jeweils auf Bildverarbeitungsalgorithmen zurückgreifen.

8. Verfahren nach einem der vorhergehenden Ansprüche, wobei die mehreren Inspektionswerkzeuge unterschiedliche oder voneinander verschiedene Bereiche des Prüflings inspizieren.

9. Verfahren nach einem der vorhergehenden Ansprüche, wobei eine Trainingsinspektion bis zu 250 Gutprodukte und/oder Defektprodukte, 10 Testrunden und 12 Bilder pro Produkt umfassen kann.

10. Verfahren nach einem der vorhergehenden Ansprüche, wobei das Inspektionssystem mehrere optische Sensoren, die vorzugsweise mit optischen Komponenten wie Objektiven und Spiegeln versehen sind, eine Beleuchtung, eine Transportvorrichtung für den Prüfling und eine Auswertungssoftware umfasst, wobei jede dieser Komponenten nach einer Vielzahl von Parametern einstellbar ist.

11. Inspektionssystem zur Beurteilung eines Prüflings, das dazu ausgelegt ist, nach einem Verfahren der vorhergehenden Ansprüche konfiguriert zu werden.
